# EUROPEAN PATENT APPLICATION

(11) **EP 4 582 985 A1**
(43) Date of publication of application: **09.07.2025**
(21) Application number: 23875167.1
(22) Date of filing: 27.09.2023
(51) Int. Cl.: G06F 21/62, G06F 21/60, G06F 21/46, G06F 16/25, G06F 21/53, G06Q 10/06, G06Q 30/02

(54) **DATA COLLECTION SYSTEM, AND OPERATION METHOD THEREFOR**

(30) Priority: 07.10.2022 KR 20220128512; 02.12.2022 KR 20220166587
(71) Applicant: Samsung Electronics Co., Ltd., Suwon-si, Gyeonggi-do 16677 (KR)
(72) Inventor: KO, Youngtae, Suwon-si, Gyeonggi-do 16677 (KR)
(74) Representative: Gulde & Partner
(86) International application number: PCT/KR2023/015059
(87) International publication number: WO 2024/076103

(57) **Abstract**

A data collection system according to various embodiments comprises: a communication module which receives input information from a user terminal and external information from at least one data source; at least one memory which stores the external information; and at least one processor which executes an application for obtaining the external information from the at least one data source on the basis of the input information, wherein, when the input information is received from the user terminal, the at least one processor independently stores each of first and second input information, allocated to the application, in the at least one memory.

## Description

### [Technical Field]

The disclosure relates to a data collection system and an operation method therefor.

### [Background Art]

Data collection system is one of technologies for configuring a big data system, and is a technology of collecting data inside or outside an organization. The data collection system accesses various data sources, and collects structured data or unstructured data in various collection methods and converts and stores them.

For example, an administrator who operates an open market can use a data collection system in order to collect price information, etc. on a specific product, and can determine collection target information and a data source (or IP address thereof) according to the settings of an application installed in the data collection system.

However, unlike the above-described example, when the collection target information requires security (for example, personal information collection), the data collection system prepares a separate security storage externally and requires the administrator to set up and register separate security. The linkage of the data collection system and the security storage makes a system structure complex, and causes the possibility of errors due to the increased complexity.

### [Disclosure of Invention]

### [Technical Problem]

The disclosure is to independently process security settings in a server itself without having an external security storage in implementing a data collection system.

### [Solution to Problem]

A data collection system of an embodiment includes a communication module which receives input information from a user terminal and external information from at least one data source, at least one memory which stores the external information, and at least one processor which executes an application obtaining the external information from the at least one data source, based on the input information. When receiving the input information from the user terminal, the at least one processor independently stores, in the at least one memory, each of first input information and second input information allocated to the application. The input information includes the first input information and the second input information.

An operation method of a data collection system of an embodiment includes receiving input information including first input information and second input information from a user terminal, providing an application that obtains external information from at least one data source, based on the input information, and independently storing, in at least one memory, each of the first input information and the second input information allocated to the application, based on the input information.

### [Brief Description of Drawings]

FIG. 1 is a block diagram of a data collection system according to an embodiment.
FIG. 2 is a block diagram of a data collection system according to an embodiment.
FIG. 3 is a construction diagram of a data collection system according to an embodiment.
FIG. 4 is a construction diagram of a data collection system according to another embodiment.
FIG. 5 is a block diagram of a data collection system according to FIGS. 3 and 4.
FIG. 6 is a flowchart of an operation method of a data collection system according to an embodiment.
FIG. 7 illustrates specification sheet registration in a data collection system according to an embodiment.
FIG. 8 is a flowchart of an operation method of a data collection system according to an embodiment.

### [Best Mode for Carrying out the Invention]

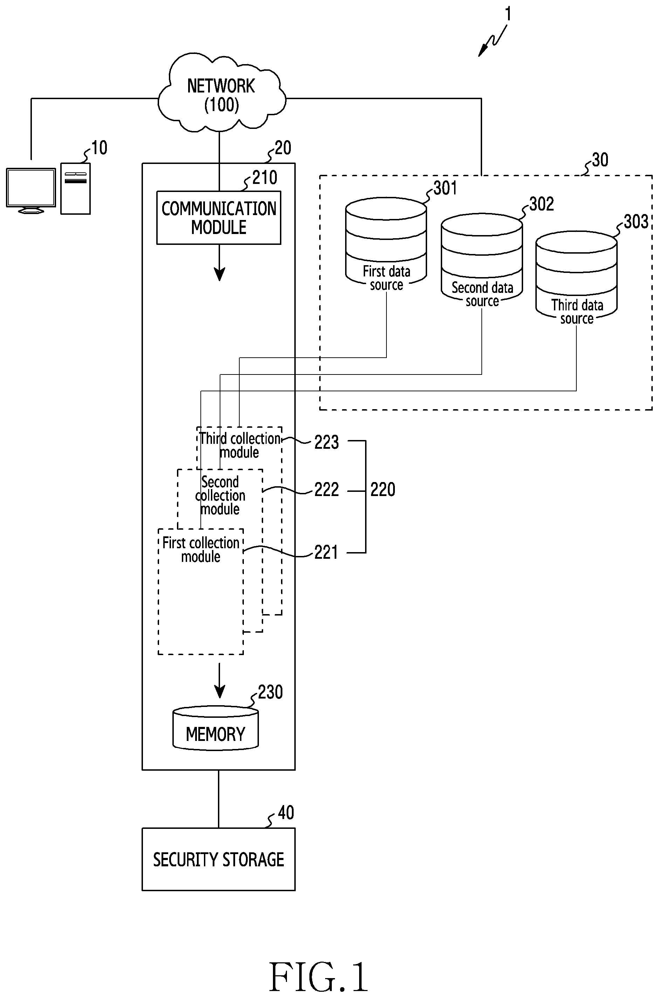

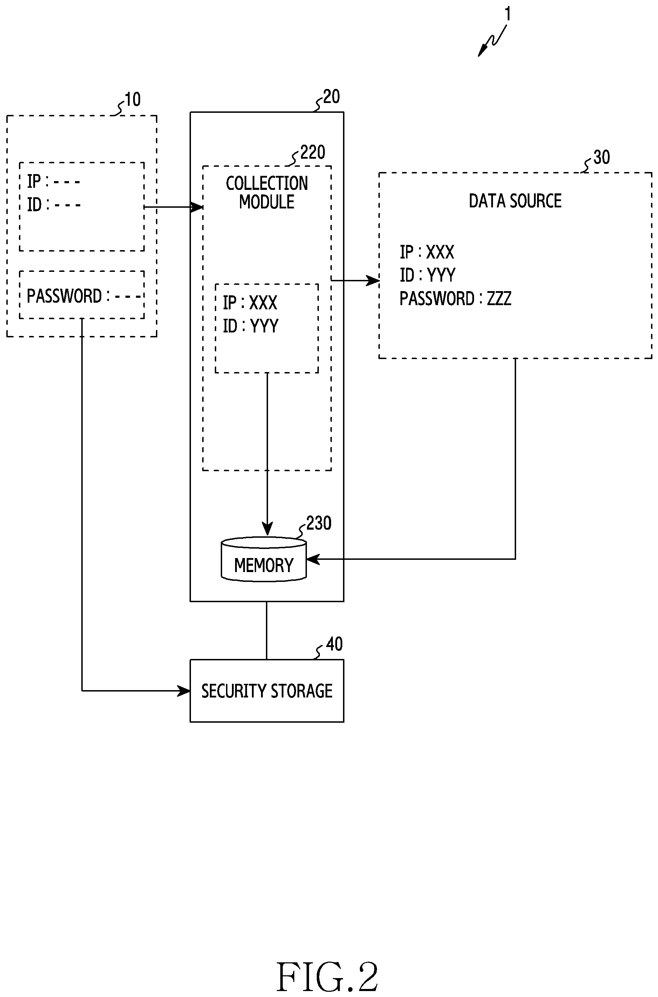

FIG. 1 is a construction diagram of a data collection system 1 according to an embodiment, and FIG. 2 is a block diagram of the data collection system 1 according to an embodiment.

Referring to FIG. 1, the data collection system 1 of an embodiment includes a user terminal 10, a server 20, a data source 30, and a security storage 40, and the user terminal 10, the server 20, the data source 30, and the security storage 40 are interconnected through a network 100, such as a home network, a corporate network, and the Internet. The network 100 may include at least one switch and/or router. A part of the network 10 may include a local area network (LAN) and/or a telecommunications network (e.g., 5G mobile telephony network and wireless LAN).

The user terminal 10 corresponds to an interface device that may allow a user (or administrator) to install and execute a collection module 220, which is an application implemented through the server 20. The user may input a command to collect external information to be collected through an administrator portal, which is an interface of the user terminal 10. For example, the administrator portal may output a screen of inputting an IP address of the data source 30, an ID of a database, and a password, and the user may input the IP address, the ID of the database, and the password, which are input information for providing the collection module 220, to the user terminal 10 through the output screen.

The server 20 includes a communication module 210 performing communication with the user terminal 10 and the data source 30 through the network 100, and a memory 230 storing the external information collected from the data source 30.

The communication module 210 may receive certain input information from the user terminal 10, and present execution commands or processed information to the user terminal 10 and/or other external devices (not shown). In addition, the communication module 210 may present information stored in the data source 30 to the memory 230. For example, the communication module 210 may include a transceiver for transmitting and receiving information.

The data source 30 is for establishing a connection between the server 20 and the database, and may include a database management system (DBMS), a sensor, an external server, a storage medium, and hypertext markup language (html), extensible markup language (xml), JavaScript object notation (JSON), etc. implemented on the web.

As shown in FIG. 1, the data source 30 may be implemented in various forms as a first data source 301, a second data source 302, and a third data source 303, and the server 20 of an embodiment may collect and process data stored in the DBMS, semi-structured binary files, unstructured binary files, script files, etc., and store them in memory 230.

The collection module 220 is an application developed for collection of the data source 30. Depending on settings for the application, the collection module 220 may access the data source 30 and collect external information. The collection module 220 may collectively store setting information for the application in the memory 230. Before the executing of data collection, the setting information and security information such as the IP address of the data source 30, the ID of the database, and the password may be set through the portal presented by the user terminal 10. The collection module 220 may collectively store each set information in the memory 230.

The collection module 220 may be implemented as a plurality of collection modules 221, 222, and 224 according to user's settings, and a plurality of applications for collecting various pieces of external information may be installed in the server 20.

The security storage 40 is an external security system for installing and executing the collection module 220, and the user terminal 10 performs separate security authentication for the security storage 40. When the security authentication for the security storage 40 is completed, the collection module 220 may collect external information from the data source 30. The user may register and authenticate a security value through the security storage 40 prepared separately from the server 20.

The security storage 40 may store and manage a hash key and encryption key for security authentication. For example, the security storage 40 may include various pieces of security information such as encryption keys. When the user registers the password through the administrator portal, the security storage 40 stores the encrypted password and thereafter, when the user inputs the password, the security storage 40 verifies whether the password input by the user terminal 10 matches with a stored password. Data tokenized for encryption may be maintained by the security storage 40 capable of network-access control for the sake of further processing.

According to an embodiment, the collection module 220 for data collection for the data source 30 may be registered to the server 20. The user may input input information required for setting the collection module 220, which is an application installed in the server 20, through the administrator portal installed in the user terminal 10.

Meanwhile, referring to FIG. 2, the user inputs the IP of the data source 30 and the ID of the database that are the setting information for allowing the collection module 220 to collect data, and inputs the password that is the security information together, through the administrator portal of the user terminal 10.

Depending on the characteristics of the database or the policy of the administrator (user), the password and the security information may be required separately. In this case, the data collection system 1 prepares the security storage 40 externally, separately from the server 20, and performs a security authentication process through the external security storage 40. The data collection system 1 may separately present the security storage 40 externally, establish a distributed server system, prepare for external security attacks, and reduce traffic for encryption between the user terminal 10 and the server 20.

In the data collection system 1 of FIGS. 1 and 2, a separate registration process for the security storage 40 is additionally required for the user to set security for the collection module 220. The user may store a password for specific data collection in the security storage 40 through the administrator portal.

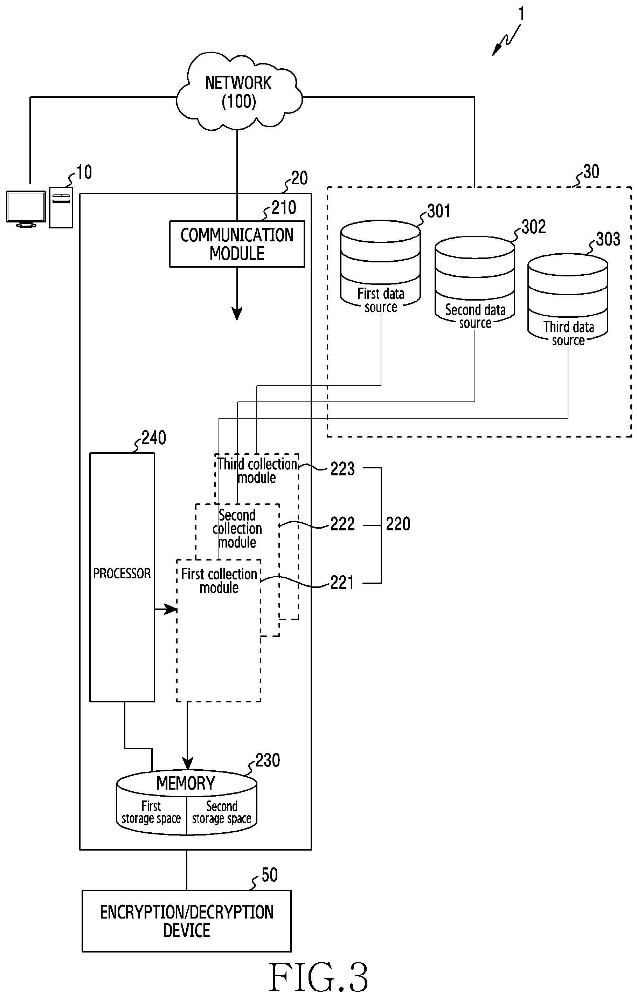

Meanwhile, the data collection system 1 described below may manage the password on its own without having the security storage 40 external to the server 20, reduce system complexity, and facilitate operation. In addition, the data collection system 1 may manage the password independently according to the algorithm implemented in the server 20 itself and prepare for external security attacks as well. A description is made below with reference to FIGS. 3 to 8.

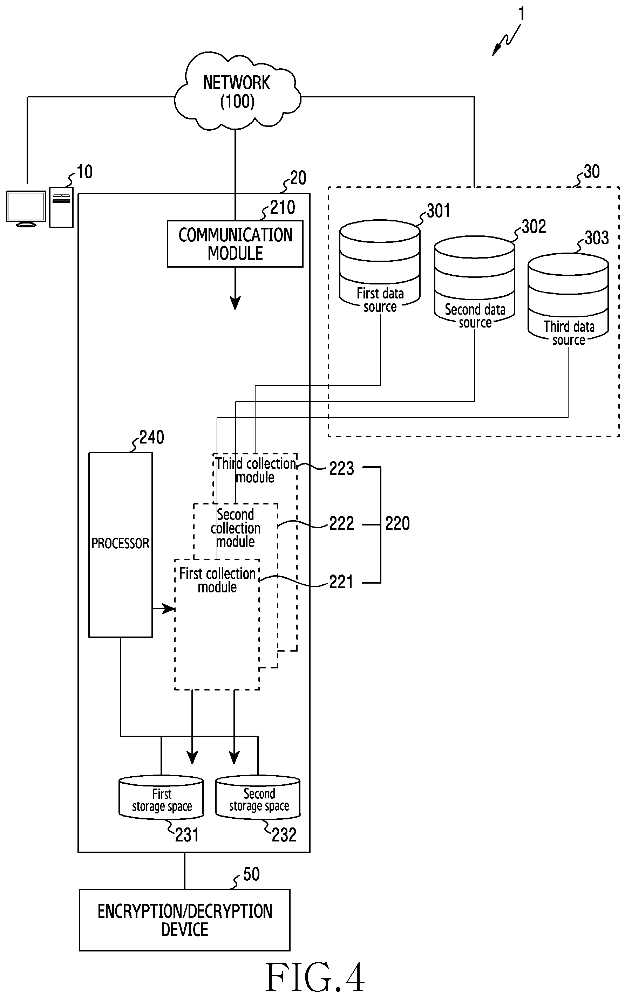

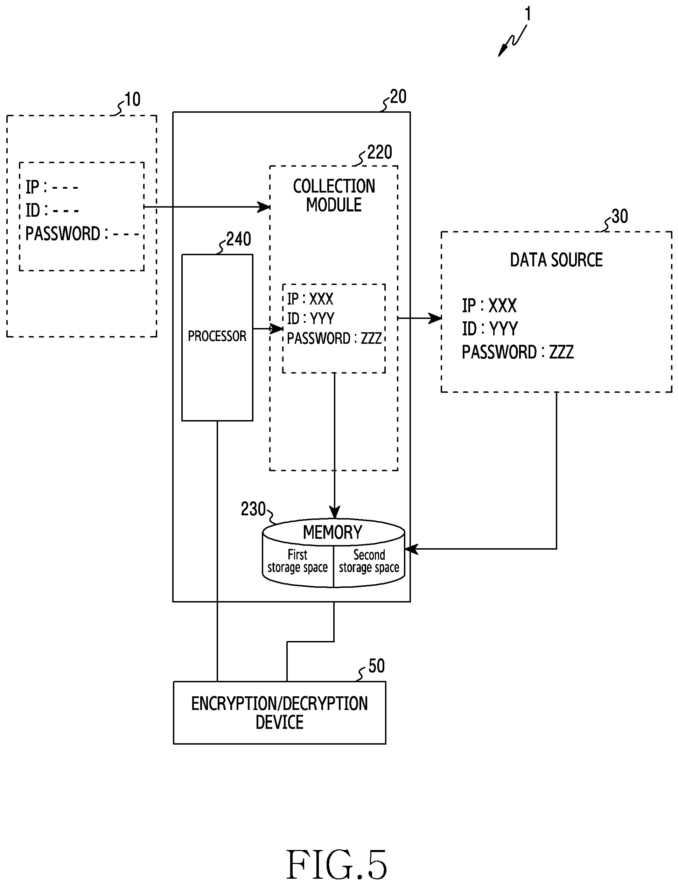

FIG. 3 is a construction diagram of a data collection system according to an embodiment, FIG. 4 is a construction diagram of a data collection system according to another embodiment, and FIG. 5 is a block diagram of the data collection system according to FIGS. 3 and 4.

Referring to FIGS. 3 and 4, the data collection system 1 of an embodiment includes a user terminal 10, a server 20, a data source 30, and an encryption/decryption device 50, and the user terminal 10, the server 20, and the data source 30 are interconnected through a network 100, such as a home network, a corporate network, and the Internet. The network 100 may include at least one switch and/or router. A part of the network 10 may include a local area network (LAN) and/or a telecommunication network (e.g., 5G mobile telephony network, wireless LAN).

According to an embodiment, unlike as shown in FIG. 3, the encryption/decryption device 50 may be presented internally in the server 20. The encryption/decryption device 50 may support encryption/decryption of a password stored in the memory 230.

According to an embodiment, the encryption/decryption device 50 performs encryption processing on a password received from the server 20 and transmits the encrypted password to the memory 230. In addition, the encryption/decryption device 50 may receive an encrypted password from the memory 230, perform decryption processing, and present it to the memory 230.

According to an embodiment, the encryption/decryption device 50 may transmit an encrypted or decrypted password only to a specific space of the memory 230. For example, referring to FIG. 3, the memory 230 may have a storage space divided into a first space and a second space, and may store only information on general settings for data collection in the first space, and may store only information on security settings for data collection in the second space. At this time, only encrypted or decrypted passwords, which are the information on the security settings, may be stored in the second space. When the server 20 receives a password from the user terminal 10, the processor 240 of an embodiment may control to store the password only in the second space of the memory 230.

In addition, according to an embodiment, the memory 230 may be implemented as a first memory 231 and a second memory 232 which are physically separated. Only the information on the general settings for data collection may be stored in the first memory 231, and only the information on the security settings for data collection may be stored in the second memory 232. That is, even if a user collectively inputs an IP address of a data source, an ID of a database, and a password through the administrator portal, the server 20 may independently store them in each of the physically separated first memory 231 and second memory 232. For example, the IP address of the data source and the ID of the database may be stored in the first memory 2310, and the password may be stored in the second memory 232.

The user terminal 10 corresponds to an interface device that may allow the user (or administrator) to install and execute a collection module 220, which is an application implemented through the server 20. The user may input a command of collecting external information to be collected, through the administrator portal, which is an interface of the user terminal 10. For example, the administrator portal may output a screen of inputting the IP address of the data source 30, the ID of the database, and the password, and the user may input the IP address, the ID of the database, and the password, which are input information for providing the collection module 220, to the user terminal 10 through the output screen.

The server 20 includes a communication module 210 communicating with the user terminal 10 and the data source 30 through the network 100, and the memory 230 storing external information collected from the data source 30.

The communication module 210 may receive predetermined input information from the user terminal 10, and present an execution command or processed information to the user terminal 10 and/or another external device (not shown). In addition, the communication module 210 may present information stored in the data source 30 to the memory 230. For example, the communication module 210 may include a transceiver for transmitting and receiving information.

The data source 30 is for establishing a connection between the server 20 and the database, and may include a database management system (DBMS), a sensor, an external server, a storage medium, and hypertext markup language (html), extensible markup language (xml), JavaScript object notation (JSON), etc., implemented on the web.

As shown in FIG. 3 or FIG. 4, the data source 30 may be implemented in various forms as a first data source 301, a second data source 302, and a third data source 303, and the server 20 of an embodiment may collect and process data stored in the DBMS, semi-structured binary files, unstructured binary files, script files, etc., and store them in the memory 230.

The collection module 220 is an application developed for collection of the data source 30. Depending on settings for the application, the collection module 220 may access the data source 30 and collect external information. The collection module 220 may collectively store setting information for the application in the memory 230. Before the executing of data collection, the setting information and security information such as the IP address of the data source 30, the ID of the database and the password may be set through the administrator portal presented by the user terminal 10. The collection module 220 may collectively store each set information in the memory 230.

The collection module 220 may be implemented as a plurality of collection modules 221, 222, and 224 according to user's setting, and a plurality of applications for collecting various pieces of external information may be installed in the server 20.

The memory 230 of an embodiment may store first input information and second input information, which are information input from the user terminal 10. Here, the first input information may include the IP address of the data source and the ID of the database that are general setting information of an application for data collection, and the second input information may include the password that is security information of the application for data collection.

Referring to FIG. 3, the memory 230 of an embodiment may be implemented as a physically single storage device, and may form a separate storage space within one memory 230. The memory 230 of an embodiment may have a storage space separated into a first storage space and a second storage space, and the first input information may be stored in the first storage space and the second input information may be stored in the second storage space. When the processor 240 receives input information from the user terminal 10, the processor 240 may divide the input information into the first input information and the second input information, and control the memory 230 to store the first input information in the first storage space and the second input information in the second storage space.

Referring to FIG. 4, the memory 230 of an embodiment may be implemented as a first memory 231 and a second memory 232 which are physically separated. When the processor 240 receives input information from the user terminal 10, the processor 240 may divide the input information into the first input information and the second input information, and control at least one of the first memory 231 or the second memory 232 to store the first input information in the first memory 231 and the second input information in the second memory 232.

The processor 240 may, for example, execute software (e.g., data collection application) and control the communication module 210, the collection module 220, and the memory 230 (e.g., hardware or software component) which are connected to the processor 240, and may perform various data processing or operations. According to an embodiment, as at least a part of the data processing or operations, the processor 240 may store a command or data received from another component (e.g., user terminal 10 or data source 30) in a volatile memory (not shown), process the command or data stored in the volatile memory (not shown), and store the result data in a nonvolatile memory. According to an embodiment, the processor 240 may include a main processor (not shown) (e.g., central processing unit or application processor) or an auxiliary processor (not shown) (e.g., graphics processing unit, neural processing unit (NPU), image signal processor, sensor hub processor, or communication processor) that may operate independently of or together with the main processor. The auxiliary processor may be implemented separately from the main processor or as a part thereof.

The processor 240 of an embodiment may receive input information, and when the input information includes a password, the processor 240 may transmit an encryption processing command to the encryption/decryption device 50 to perform encryption processing on the password. The input information may be presented through the administrator portal that is an interface implemented in the user terminal 10. When the input information includes no password and includes only the general setting information, the processor 240 allocates the setting information to an application to be provided and stores it in the memory 230. When the encryption processing is completed according to the processing command of the processor 240, the encrypted password may be stored in the memory 230. The encrypted password may be stored in the second storage space of the memory 230, or may be stored in the second memory 232 that is physically independent from the first memory 231.

When the processor 240 of an embodiment receives a data collection execution command, the processor 240 executes the collection module 220 and receives external information from the data source 30. The external information may be stored in the memory 230.

When the processor 240 of an embodiment receives a provision command for the collection module 220, the processor 240 stores a setting storage and a security storage that are linked with the application. At this time, each of the storages may be implemented in each of the first storage space and the second storage space separated within one memory 230, or may be implemented in each of the first memory 231 and the second memory 232. The collection module 220 is granted an authority capable of decrypting an encrypted password within the security storage, and the encrypted password is decrypted through the encryption/decryption device 50 at execution of the collection module 220. After the processor 240 provides the collection module 220, the processor 240 connects the setting storage and the security storage and then controls the server 20 to execute the collection module 220 and collect external information from the data source 30.

The data collection system 1 of an embodiment receives input information from the user terminal 10 and external information from at least one data source through the communication module 210. Since the administrator portal, which is software, is installed in the user terminal 10, the user may input the input information through the administrator portal and collect the external information from the data source. In the data collection system 1, the server 20 includes at least one memory 230 storing the external information. The memory 230 of an embodiment may store the input information together with the external information. The processor 240 of an embodiment may execute an application obtaining the external information from at least one data source 30, based on the input information. The application may be the collection module 220 for collecting the external information from the data source 30, and the type and attribute of data, which are collection targets, may be set according to a specification sheet registered by the user through the administrator portal. When the processor 240 of an embodiment receives the input information from the user terminal 10, the processor 240 may independently store each of the first input information and the second input information allocated to the application in at least one memory 230. The input information includes the first input information and the second input information. Here, the first input information may be the setting information for allowing the application to collect the external information, and the second input information may be the security information for allowing the collection of the external information.

When the security information is allocated to the second information included in the input information, the data collection system 1 of an embodiment may store the first input information in the first memory 231 and the second input information in the second memory 232. The data collection system 1 may manage the security information for the application in a different storage space from the general setting information.

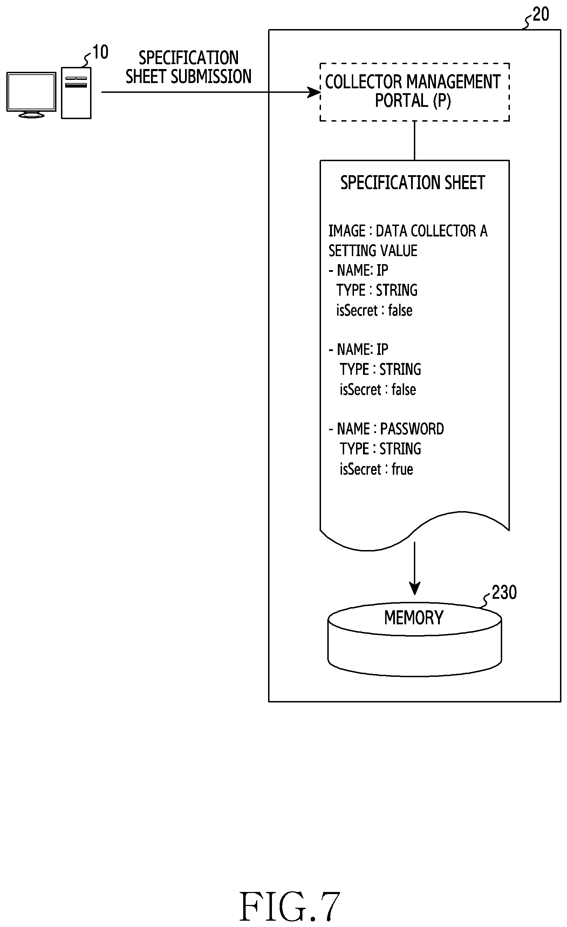

Referring to FIG. 5, the data collection system 1 of an embodiment has a separate software module (not shown) installed separately for the provision, setting, and management of the collection module 20. The software module may be executed under the control of the processor 240. The server 20 collectively receives the IP of the data source, the ID of the database, and the password through the administrator portal of the user terminal 10, but the processor 240 may control the memory 230 to process in different storage spaces according to the contents of a specification sheet (described in FIG. 7) input by the user.

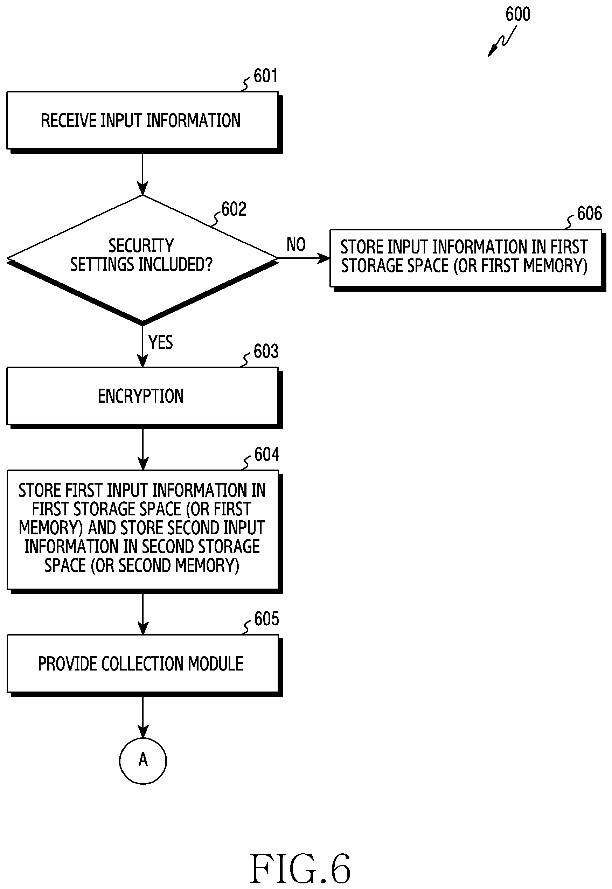

FIG. 6 is a flowchart 600 of an operation method of a data collection system according to an embodiment, and FIG. 7 illustrates specification sheet registration in the data collection system according to an embodiment. The flowchart of FIG. 6 is described with reference to FIG. 7.

The server 20 receives input information from the user terminal 10 through the network 100 (601). The input information is data input through the administrator portal implemented in the user terminal 10, and may include first input information and second input information. The first input information is setting information such as an IP address of the data source 30 and an ID of a database, and the second input information refers to security information such as a password.

The server 20 processes the input information and determines whether the input information includes security settings. Whether or not the security settings are made is determined according to a specification sheet registered by the user through the administrator portal. The specification sheet is described with reference to FIG. 7.

Referring to FIG. 7, the user may register a specification sheet of the collection module 20 through the administrator portal installed in the user terminal 10. The specification sheet presented through the administrator portal may record a binary image and the details of setting values to be used.

Through the administrator portal, the user terminal 10 of an embodiment may display a storage space for each of the first input information and the second input information and output the specification sheet. Through the administrator portal, the user terminal 10 may inform the user that the security information is independently managed by the server 20 itself.

In addition, the user terminal 10 of an embodiment may output the second input information after outputting the first input information through the administrator portal, and inform the user that the security information is independently managed by the server 20 itself.

The user terminal 10 of an embodiment may determine the output order of the first input information and the second input information, based on at least one of the attributes of external information or the attributes of the data source 30. When the password is necessarily included due to the attributes of the external information or the attributes of the data source, the user terminal 10 may output the first input information and the second input information in different orders and inform the user that the second input information is independently managed in a specific space of the memory 230. When the password is necessarily included due to the attributes of the external information or the attributes of the data source, the data collection system 1 of an embodiment may store the second input information in the second storage space, or the second memory 232, of the memory 230.

Various pieces of information required for the data module 20 to collect data may be managed in the form of a specification sheet. The specification sheet may include the name and type of a setting value and whether or not the setting value is a security value (isSecret). The user terminal 10 may output a screen for specifying the setting value in the form of an image or text through the administrator portal. When the user inputs and submits the setting value through the specification sheet of the collection module 20, the processor 240 (FIG. 3 or FIG. 4) transmits the specification sheet and the setting value together to the collection module 220, and transmits a provision command or execution command to the collection module 220.

When it is determined that the input information includes the security settings (602), the server 20 encrypts and processes some of the information that the user inputs through the administrator portal (603). For example, the processor 240 may transmit the password, which is information about the security settings among the input information, to the encryption/decryption device 50, and store the password encrypted by the encryption/decryption device 50 in the memory 230.

When the encryption processing is completed, the server 20 stores the first input information in the first space (or first memory 231) and stores the second input information in the second space (or second memory 232) (604).

The memory 230 of an embodiment may be implemented as a physically single storage device, and may form a separate storage space within one memory 230. The memory 230 of an embodiment may have a storage space separated into the first storage space and the second storage space, and the first input information may be stored in the first storage space and the second input information may be stored in the second storage space. When the server 20 receives the input information from the user terminal 10, the server 20 may divide the input information into the first input information and the second input information, and control the memory 230 to store the first input information in the first storage space and the second input information in the second storage space.

The memory 230 of an embodiment may be implemented as the first memory 231 and the second memory 232 that are physically separated. When the server 20 receives the input information from the user terminal 10, the server 20 may divide the input information into the first input information and the second input information, and control at least one of the first memory 231 or the second memory 232 to store the first input information in the first memory 231 and the second input information in the second memory 232.

That is, the server 20 may independently manage the security information required for the application to collect data, in a storage space different from a space where the setting information is stored. Accordingly, the data collection system 1 may perform its own security function without an external security storage separately managed and operated, and may make collective protection measures.

The server 20 of an embodiment provides the collection module 220 (605).

Meanwhile, when it is determined that the input information includes no security settings (602), the server 20 stores the input information in the first space (or first memory) (606).

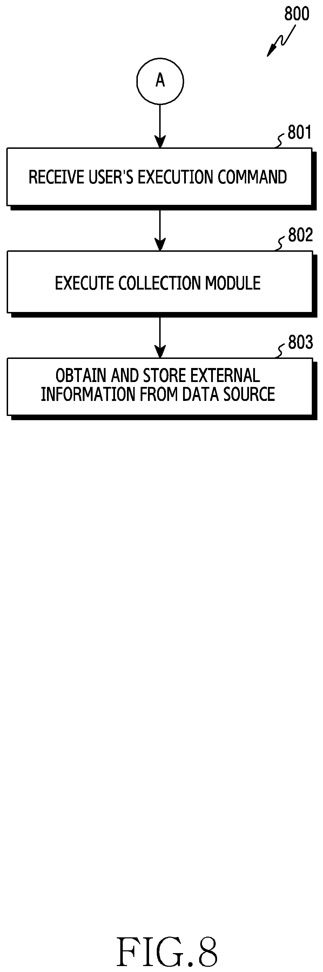

Thereafter, when the server 20 provides the collection module 220, the user may input an execution command for data collection through the administrator portal. The following process is described with reference to FIG. 8.

FIG. 8 is a flowchart 800 of an operation method of a data collection system according to an embodiment.

When the server 20 receives a user's execution command through the administrator portal (801), the server 20 executes the collection module (802) (802). Before executing the collection module, the server 20 transmits a decryption processing command to the encryption/decryption device 50 in order to perform decryption processing for an encrypted password stored in the memory 230.

The server 20 receives the decrypted processing result from the encryption/decryption device 50, and when a password input by the user matches with the stored password, the server 20 obtains and stores external information from the data source 30 (803).

Various embodiments of this document and terms used herein are not intended to limit the technical features described in this document to specific embodiments, but should be understood as including various modifications, equivalents, or alternatives of a corresponding embodiment. In relation to the description of the drawings, similar reference numbers may be used for similar or related components. The singular form of a noun corresponding to an item may include a single or plurality of items, unless the relevant context clearly indicates otherwise. In this document, each of phrases such as "A or B", "at least one of A and B", "at least one of A or B", "A, B or C", "at least one of A, B and C", and "at least one of A, B, or C" may include any one of items listed together in a corresponding phrase among the phrases, or any possible combination thereof. Terms such as "first", "second", "firstly" or "secondly" may be used simply to distinguish one component from another component, and do not limit the corresponding components in other respects (e.g., importance or order). When some (e.g., first) component is mentioned to be "coupled" or "connected" to another (e.g., second) component, with or without the term "functionally" or "communicatively", it means that some component may be connected to another component directly (e.g., wiredly), wirelessly, or through a third component.

The term "module" used in the various embodiments of this document may include a unit implemented in hardware, software, or firmware, and may be used interchangeable with a term such as a logic, a logic block, a component, or a circuit, for example. The module may include an integrated component, or a minimum unit of the component or a part thereof performing one or more functions. For example, according to an embodiment, the module may be implemented in the form of an application-specific integrated circuit (ASIC).

Various embodiments of this document may be implemented as software (e.g., application) that includes one or more instructions stored in a storage medium (e.g., memory 230) that may be read by a machine (e.g., server 20). For example, a processor (e.g., processor 240) of the machine (e.g., server 20) may call at least one instruction among the stored one or more instructions from the storage medium, and execute it. This enables the machine to be operated to perform at least one function according to the called at least one instruction. The one or more instructions may include a code provided by a compiler or a code executable by an interpreter. The machine-readable storage medium may be presented in the form of a non-transitory storage medium. Here, 'non-transitory' only means that the storage medium is a tangible device and does not include a signal (e.g., electromagnetic wave). This term does not distinguish a case where data is stored semi-permanently in the storage medium and a case where data is stored temporarily.

According to an embodiment, a method of various embodiments disclosed in this document may be included and presented in a computer program product. The computer program product may be traded as merchandise between a seller and a buyer. The computer program product may be distributed in the form of a machine-readable storage medium (e.g., compact disc read only memory (CD-ROM)), or may be distributed (e.g., downloaded or uploaded) through an application store (e.g., Play StoreTM), directly between two user devices (e.g., smartphones), or online. In the online distribution, at least part of the computer program product may be at least temporarily stored in the machine-readable storage medium such as a memory of a manufacturer's server, an application store's server, or a relay server, or be temporarily provided.

According to various embodiments, each component (e.g., a module or program) of the above-described components may include a single or plurality of entities, and some of the plurality of entities may be also separately disposed in another component. According to various embodiments, one or more of the components or operations described above may be omitted, or one or more other components or operations may be added. Alternatively or additionally, a plurality of components (e.g., modules or programs) may be integrated into a single component. In this case, the integrated component may perform one or more functions of each of the plurality of components, identically or similarly to those performed by the corresponding component among the plurality of components prior to the integration. According to various embodiments, operations performed by a module, program, or another component may be executed sequentially, in parallel, iteratively, or heuristically, or one or more of the operations may be executed in a different order or be omitted, or one or more other operations may be added.

## Claims

1. A data collection system comprising:
a communication module configured to receive input information from a user terminal and external information from at least one data source;
at least one memory configured to store the external information; and
at least one processor configured to execute an application obtaining the external information from the at least one data source, based on the input information,
wherein, when receiving the input information from the user terminal, the at least one processor is configured to independently store, in the at least one memory, each of first input information and second input information allocated to the application, the input information comprising the first input information and the second input information.

2. The data collection system of claim 1, wherein the memory comprises a first memory and a second memory, and
the at least one processor stores the first input information in the first memory and the second input information in the second memory.

3. The data collection system of claim 2, wherein the first input information comprises setting information for collecting the external information by the application, and
the second input information comprises security information for allowing the collection of the external information.

4. The data collection system of claim 3, wherein, when the second input information is allocated the security information, the at least one processor stores the first input information in the first memory and stores the second input information in the second memory.

5. The data collection system of claim 1, wherein the at least one processor controls the communication module to allow the user terminal to output a specification sheet for providing the application.

6. The data collection system of claim 5, wherein the user terminal outputs the specification sheet displaying a storage space for each of the first input information and the second input information.

7. The data collection system of claim 6, wherein the user terminal outputs the second input information after outputting the first input information.

8. The data collection system of claim 6, wherein the user terminal determines the output order of the first input information and the second input information, based on at least one of the attribute of the external information or the attribute of the data source.

9. The data collection system of claim 2, further comprising an encryption/decryption module operatively connected to the second memory,
wherein, when receiving the second input information, the at least one processor controls the encryption/decryption module to encrypt the second input information, and stores the encrypted second input information in the second memory.

10. The data collection system of claim 1, wherein the first input information comprises an IP address of the data source and an ID of a database, and
the second input information comprises a password for executing the application.

11. An operation method of a data collection system, comprising:
receiving input information comprising first input information and second input information from a user terminal;
providing an application that obtains external information from at least one data source, based on the input information; and
independently storing, in at least one memory, each of the first input information and the second input information allocated to the application, based on the input information.

12. The operation method of claim 11, wherein independently storing in the at least one memory comprises storing the first input information in a first memory and storing the second input information in a second memory.

13. The operation method of claim 12, wherein the first input information comprises setting information for collecting the external information by the application, and
the second input information comprises security information for allowing collection of the external information.

14. The operation method of claim 13, wherein independently storing in the at least one memory comprises, when the second input information is allocated the security information, storing the first input information in the first memory, and storing the second input information in the second memory.

15. The operation method of claim 11, further comprising controlling the user terminal to output a specification sheet for providing the application.
